Europäisches Patentamt

(19) European Patent Office     (11) Publication number: **0 132 084**

Office européen des brevets     **B1**

# (12) EUROPEAN PATENT SPECIFICATION

(45) Date of publication of patent specification: **19.11.87**     (51) Int. Cl.⁴: **A 22 C 17/04**

(21) Application number: **84304586.5**

(22) Date of filing: **04.07.84**

(54) Apparatus for the separation of mixtures of materials of different consistencies such as meat and bone.

(30) Priority: **13.07.83 US 513487**

(43) Date of publication of application:
**23.01.85 Bulletin 85/04**

(45) Publication of the grant of the patent:
**19.11.87 Bulletin 87/47**

(84) Designated Contracting States:
**AT BE DE FR GB IT NL**

(56) References cited:
**EP-A-0 030 131**
**DE-C- 54 866**
**FR-A-1 460 403**
**US-A-2 895 162**

(73) Proprietor: **POSS DESIGN LIMITED**
**701 Evans Avenue, Suite 500,**
**Etobicoke, Ontario, M9C 1A3 (CA)**

(72) Inventor: **Poss, Werner**
**159, Castle Cresent**
**Oakville Ontario L6J 5H4 (CA)**

(74) Representative: **Barlow, Roy James et al**
**J.A.KEMP & CO. 14, South Square Gray's Inn**
**London WC1R 5EU (GB)**

Courier Press, Leamington Spa, England.

**0 132 084**

**Description**

Field of the invention
The present invention is concerned with apparatus for the separation of mechanical mixtures of materials of different consistencies, such as a mixture of meat and bone, or a mixture of water and solid material such as sewage.

Review of the prior art
Processes and apparatus for the separation of mixtures of materials of different consistencies into component parts are employed in many different industries. For example, in sewage treatment it is necessary at some stage to separate as much as possible of the liquid components of the sewage from the various more solid components, so that they can be subjected separately to appropriate treatments. The presence of the solid components causes considerable difficulty in the handling of the mixtures prior to their separation.

The mechanical separation of mixtures of meat and bone into separate components is not a well-established industry. Although usually the machines were proposed for use with different animal and fish species, in practice the earlier machines were operable most successfully with chicken parts, where the difference in consistencies between the meat and the bone is adequate, but the bones are not too difficult to break without splintering and powdering. Attempts to use the machine with other meats, such as beef, pork and fish, were not as successful. Even with chicken, problems were and still are encountered when attempting to obtain maximum production from a machine, such as too much bone content in the meat fraction, beyond the limits permitted by the licensing authorities, or too great a temperature increase in the meat fraction during separation, resulting in lowering in quality and texture of the separated meat.

A separating apparatus that proved particularly commercially successful is described in U.S. Patent Specifications Serial No. 4,025,001 and 4,069,980, issued respectively 24th May 1977 and 24th January 1978.

GB—A—1318742 discloses apparatus for the separation of mixtures of materials of different consistencies into separate fractions thereof at an operative separation pressure, comprising an apparatus body having an inlet for the mixture to be separated and respective outlets for the separated fractions, and separator screen means, whose downstream face constitutes the outlet for the separated first fraction, mounted by the said body and having an upstream face against which the mixture from the inlet at the operative separation pressure is delivered, for the corresponding first fraction thereof to pass through the separator screen means to the downstream face thereof, and for the remaining second fraction to be retained by the separator screen means and to pass to said outlet for the retained fraction and a rotary vaned pump between the mixture inlet and the said upstream face of the separator screen means, said pump having a pump chamber receiving the mixture from the inlet and a pump rotor carrying at least one vane rotatable about an axis for pressurizing the mixture in the pump chamber to said operative separation pressure. This prior art apparatus mentions the use of a rotary vaned stainless steel pet food pump to feed the incoming mixture to a conveyor screw cooperating with the separator screen means.

It is the principal object of the invention to provide an improved apparatus for the separation of mixtures of materials of different consistencies, such as mixtures of meat and bone capable of higher operative separation pressures than in the prior art apparatus.

Accordingly the present invention is characterised in that the rotary vaned pump has a delivery pressure of from 70 to 210 kg/cm$^2$ (1,000 to 3,000 lbs/in$^2$); in that the pump chamber is mounted within the said body; in that the said at least one vane is of fixed radial length extending on both sides of the pump rotor axis and mounted in a respective radially-extending slot in the rotor and moving radially therein as the rotor rotates; in that the said pump chamber is formed about a chamber longitudinal axis which is radially displayed from said rotor axis of the rotation so that each pump compartment formed by the at least one pump vane decreases in volume as the at least one pump vane moves from an inlet opening to the pump chamber toward an outlet opening from the pump chamber and increases in volume as the at least one pump vane moves from the outlet opening toward the inlet opening; and in that the interior face of the pump chamber circumferential wall constitutes an interior cam face moving the at least one pump vane radially in the pump rotor as the pump rotor rotates with both radial edges of the at least one pump vane in operative contact with said interior cam face.

Description of the drawings
Separators which are particular preferred embodiments of the invention will now be described, by way of example, with reference to the accompanying diagrammatic drawings, wherein:—
Figure 1 is a longitudinal cross-section through a first embodiment, in which a positive displacement pump feeds the mixture to be separated to a separate, attached separating unit;
Figure 2 is a similar cross-section, to a larger scale, through the positive displacement pump of the separator of Figure 1, in order to show the construction thereof, taken on the line 2—2 in Figure 3;
Figure 3 is a plane cross-section taken on the line 3—3 in Figure 2;
Figure 3A is a plane cross-section of a detail of a vane of the pump of Figures 2 and 3, taken on the line 3A—3A of Figure 3;

2

Figure 4 is a longitudinal cross-section through a second embodiment, in which the separating unit is an integral part of the positive displacement pump, the section being taken on the line 4—4 in Figure 5;

Figure 5 is a transverse cross-section of the embodiment of Figure 4, taken on the line 5—5 in Figure 4;

Figure 6 is a longitudinal cross-section through a third embodiment, again in which the separating unit is an integral part of the positive displacement pump, the section being taken on the line 6—6 in Figure 7;

Figure 7 is a transverse cross-section taken on the line 7—7 in Figure 6;

Figure 8 is a front elevation of a separator element for use in the embodiments of Figures 4 through 7;

Figures 9 and 10 are respective side elevations of two different groups of separator elements for use in the embodiments of Figures 4 through 7;

Figures 11 and 12 are respective front elevations of portions of a unitary separator element for use in the embodiments of Figures 4 through 7;

Figure 13 is an outline diagram of the internal cam face of the positive displacement pump in side elevation and a rotor blade to accompany a description of a manner of calculating the cam face profile to permit its manufacture.

Figure 14 is a longitudinal cross-section similar to Figure 1 through a fourth embodiment; and

Figures 15 and 16 are perspective views respectively of two further forms of separator element for use in the embodiments of Figures 1 and 14.

The same references will be used if possible for similar parts in all the figures of the drawings.

Description of the preferred embodiments

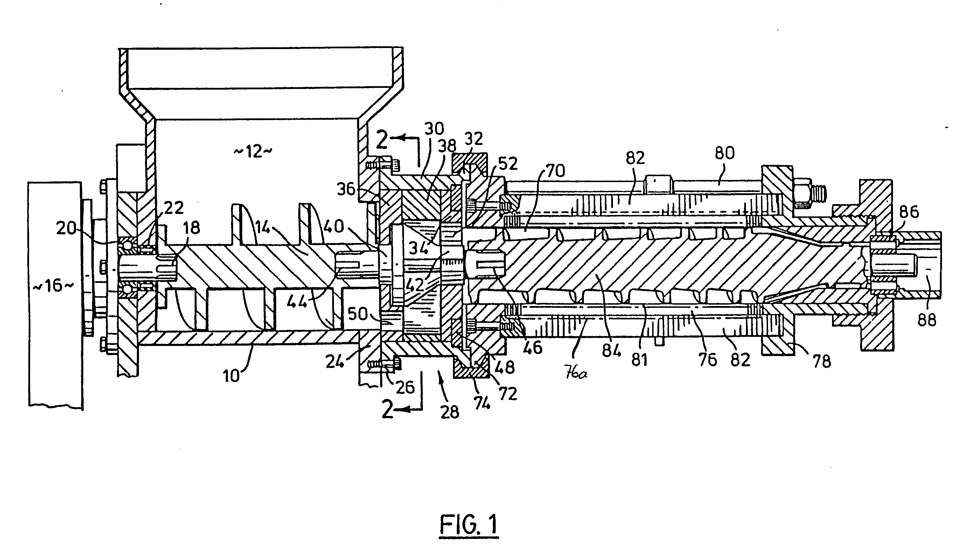

The apparatus of Figures 1 through 3A is intended principally for the mechanical separation of various kinds of meats from the bones to which they are attached. A substantial industry has developed, based on the use of such machines, since they are able economically to remove a substantial proportion of edible meat from fowl, animal and fish parts that would otherwise be discarded for food purposes, such us the necks and backs of chickens that have been cut in pieces for separate sale of the legs, breasts and wings. In practice the separation cannot be complete and the separated bone fraction will still contain some meat, while the separated meat fraction will also contain a small amount of bone in the form of tiny particles thereof. Food licensing authorities have instituted strict regulations as to the maximum overall percentages of bone and maximum particle size of the bone that is permitted in the resultant meat products. For example, the regulations of the U.S. Food and Drug Administration permit a maximum bone content of 2% by weight and a maximum bone particle size of 0.5 mm. These standards are difficult to achieve.

The apparatus consists of a frame 10 providing a hopper 12 into which the meat and bone mixture to be separated is delivered. The hopper contains a longitudinal conveyor screw 14 rotated about a horizontal axis by a drive rotor (not shown) via a connecting drive gear 16 and a splined drive output shaft 18 mounted in a bearing 20 in an end plate of the frame. Special bearing seals such as 22 are required, as is well known to those skilled in the art of food handling machinery construction, to prevent entry to the bearings of the body fluids that accompany meats.

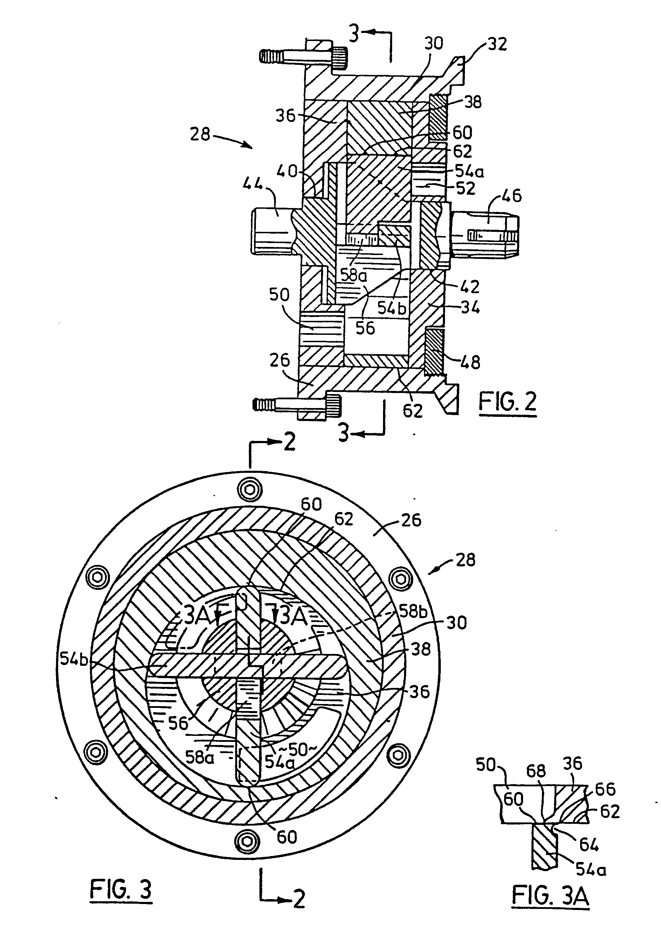

The hopper body is provided with a front end flange 24 to which is fastened the adjacent rear end mounting flange 26 of a rotary, radial-vane, positive-displacement pump indicated generally by the reference 28. Referring now especially to Figures 2, 3 and 3A, the pump comprises a cylindrical housing 30 having the rear mounting flange 26 at one end and a comparable front mounting flange 32 at the other end. Front and rear bearing plates 34 and 36 respectively are mounted in the cylindrical housing on either side of a hollow cam plate 38, so as to form the pump chamber between them. The pump rotor is provided with two cylindrical plain bearing portions 40 and 42 that are mounted in respective bores in the bearing plates to support the rotor for rotation about a horizontal axis coaxial with the axis of rotation of the hopper conveyor screw 14. Both ends of the pump rotor protrude from the respective bearing plates and are splined, the rear rotor end 44 engaging in the adjacent end of the conveyor screw 14 to be driven thereby, while the front rotor end 46 engages in the rear end of another conveyor screw to be described below. The assembly of end plates, cam plate and rotor is retained in the housing by a retainer ring 48 screw-threaded into the front end of the housing 30.

A circumferentially elongated axial inlet 50 to the pump chamber is provided in the rear end plate 36 and a circumferentially elongated axial outlet 52 is provided in the front end plate 34, the two openings being disposed diametrically opposed from one another about the axis of rotation of the rotor. The pump has two radially-extending pump vanes or blades 54a and 54b each sliding radially in a respective radial slot in the rotor boss 56, the two slots and therefore the two blades being disposed at right angles to one another. Both blades are of an axial width to fit without appreciable play between the two facing axial faces of the end bearing plates, and they are both provided with mating complementary half-width radially elongated slots 58a and 58b respectively to permit the required radial sliding movements in the rotor boss as it rotates about the axis 58. The tips 60 of the blades engage an internal cam constituted by the inside surface 62 of the bore in the hollow cam plate 38, the tips being rounded to facilitate the rubbing contact as they move over the surface. The surface 62 is generated so that at all times during the rotation of the pump rotor the blade tips are in contact with it, so that the contents of the pump chamber are positively displaced through the pump from the inlet to the outlet, and relatively high pump pressures, e.g. usually from 70—210 Kg/sq. cm (1000—3000 p.s.i.), can readily be generated. The manner in which such a cam surface is determined is described below.

3

The leading edges of the pump blades adjacent to the rear bearing plate 36 are hollow ground at 64 (Figure 3A) and hardened to form cutting edges 66. The trailing edge of the inlet 50 is also provided at 68 with a shearing edge that will cooperate with the vane cutting edges 66 to shear any hard material, such as a piece of bone, that protrudes through the inlet 40 into the pump chamber. The bone pieces are moved by the respective blade through the pump chamber and out through the outlet 52. If the bone piece jams in the outlet it will be sheared against the outlet trailing edge 68 by the following blade, the sheared off piece being carried around until it can be expelled at a subsequent passage of the blade over the outlet.

The mixture of meat and bone pieces is fed from the outlet 52 into a separator chamber indicated generally by the reference 70 (Figure 1). In this embodiment this chamber is constituted by a rear end plate 72 that is secured to the pump front end plate 34 by a circumferential clamp ring 74. The separator chamber provides a cylindrical separator or filter constituted by a large plurality of annular separator plates 76 that are tightly clamped together between the rear end plate 72 and a front end plate 78 by a number of heavy axial circumferentially-spaced tie bolts 80. the separator plates are held aligned with one another to provide a smooth internal (i.e. upstream) cylindrical front face 81 by axial aligning bars 82 engaged in radial slots in the plates. The chamber encloses an elongated feed screw 84 mounted by splined front rotor end 46 and a bearing 86 for rotation about an axis coaxial with the pump axis 58, and driven in such rotation by the rotor end 46. Rotation of the screw 84 conveys the pump-pressurised mixture of meat and bone along the interior of the cylindrical separation chamber 70, the pressure being such that the softer meat is squeezed through the separator screen 76 to the outside (i.e. downstream) separator surface, constituting in this embodiment the meat fraction outlet, from which it will fall into a suitable collector receptacle (not shown), while the bone and unseparated meat eventually exit from an annular bone fraction outlet 88 to another respective collector receptacle (also not shown). For more details of the construction and operation of this type of separator unit reference may be made to prior U.S. Patent Specifications Serial Nos. 4,025,001 and 4,069,980, the disclosures of which are incorporated herein by this reference.

In the above-described prior apparatus the hopper and separator feed screws, corresponding to the two screws 14 and 84 herein, cooperate to pressurise the mixture of meat and bone to the pressure values mentioned above, which currently are necessary to obtain satisfactory separation without more than the permitted amount of bone being discharged in the meat fraction. In the apparatus of the invention this necessary pressurisation is performed predominantly, and in some embodiments solely, by the positive displacement pump 28. The conveyor screws inherently will add a small amount to the pressurisation, but this will not be significant compared to that provided by the pump.

Since the hopper and separator feed screws 14 and 84 are now relieved of the task of pressurising the mixture their design becomes much less onerous and critical. The use of the positive displacement pump, which also acts to break the bones cleanly to suitable size, permits close control of the pressure produced with greatly reduced dependence upon the nature of the mixture and the relative proportions of bone and meat that are present. In the prior art apparatus as represented by those described in the above-mentioned U.S. patent Specifications, the screw conveyors had the dual function of pressurising the mixture and also conveying it through the apparatus, and the pressures which the two screws, particularly the separator screw, were able to apply to the mixture depended in a complicated manner on the relative friction between the meat/bone mixture, the screw body and the upstream face of the separator, and the maximum shear to which the meat or bone could be subjected. The friction also of course differed for different types of meat, and also differed among meats of the same type, depending for example on the proportion of fat present. An optimum condition for good separation is a relatively steady high pressure, but high pressures are difficult to achieve with single screw conveyors. Higher pressures can be obtained with twin screw conveyors, but these are difficult and expensive to design, manufacture and maintain. Attempts to increase the pressure simply by increasing the speed of rotation can easily lead to a situation in which the screw conveyor is shearing the meat without increasing the pressure, resulting in excessive temperature rise and degradation of the quality and texture of the meat fraction.

In the apparatus of the invention the positive displacement pump pressurises the mixture without any substantial shearing, except minor amounts at the entry and exit openings, and the conveyors need only convey the material without pressurisation. The screw conveyor 84 must be of smaller volume between successive lands along its length toward the bone fraction exit 88 to take account of the decrease of product volume radially through the filter. Some adjustment of rotational speed may be desirable to take account of different proportions of meat and bone. Thus, if the proportion of bone is high it would be desirable, though not essential, to employ a higher rotational speed of the conveyor 84 in order to expel the larger quantity of bone and maintain the output of the apparatus as high as possible.

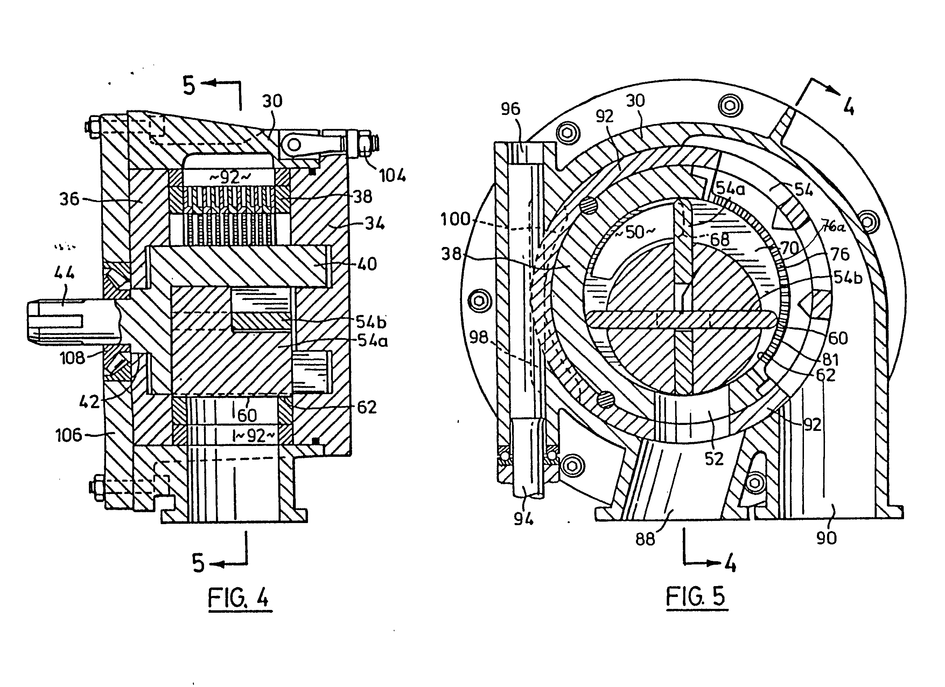

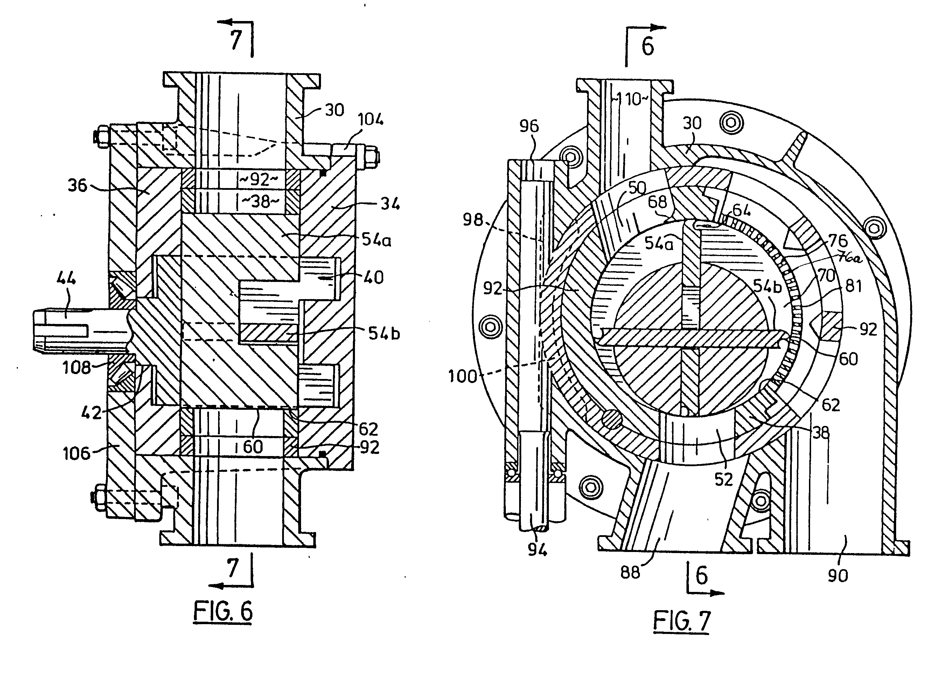

Figures 4 and 5 illustrate a second embodiment in which the positive displacement pump 28 has an axial inlet as with the pump of the apparatus of figures 1 to 3, but has two radial outlets from the pump chamber in the circumferential wall thereof, one of which is constituted by circumferential separator plates 76 through which the separated meat fraction is expressed to a corresponding outlet 90 from the casing 30, and the other of which is the outlet 88 for the bone fraction. This embodiment therefore provides an exceptionally compact form of the apparatus. The apparatus is also suited to any other application in which at least some separation is required into two components of different consistencies, for example some dewatering of a sludgy material.

In this embodiment the hollow cam plate 38 having an arc of its wall constituted by the separator

4

elements 76 is mounted in a hollow annular support member 92, which is in turn rotatably mounted in the housing 30 for rotation about the axis of rotation of the rotor. The hollow cam plate can therefore be rotated relative to the rotor to adjust the timing of the cam and the location of the outlet 88 relative to the point of minimum volume of the chamber 70 defined by the cam, so as to take account of differences in the relative volumes of the two fractions to be produced by the apparatus. In this embodiment the rotations of the cam is effected by a shaft 94 mounted in a bore 96 of the housing for longitudinal movement under the control of a linear operating rotor device (not shown) such as a hydraulic piston and cylinder motor. The shaft 94 is provided at 98 with rack teeth which mesh with cooperating rack teeth that extend over a sector 100 of the outer periphery of the support member 92. The outlets 88 and 90 in the casing 30 for the two separated fractions are of greater circumferential extent than the corresponding outlets 52 and separator 76 to be able to accommodate this rotation of the cam.

Since the apparatus is not required to drive any other piece of apparatus the end plate 34 provides an annular bearing for the adjacent rotor end and is secured to the casing 30 by quick release bolts 104. At the other side the apparatus is provided with an end closure plate 106 bolted to the casing 30 and supporting a thrust bearing 108. The support member 92 completely encloses the cam plate 38 and in so doing also serves to retain in position the separator elements 76 against the relatively high radially outwardly acting pressure of the material passing through it.

The embodiment of Figures 6 and 7 is functionally similar to that of Figures 4 and 5, the essential difference being that the inlet 50 th pump chamber and the associated inlet 110 to the casing 30 are both radial. The hollow ground portions and associated shearing knife edges must therefore be provided at the tips of the vane blades.

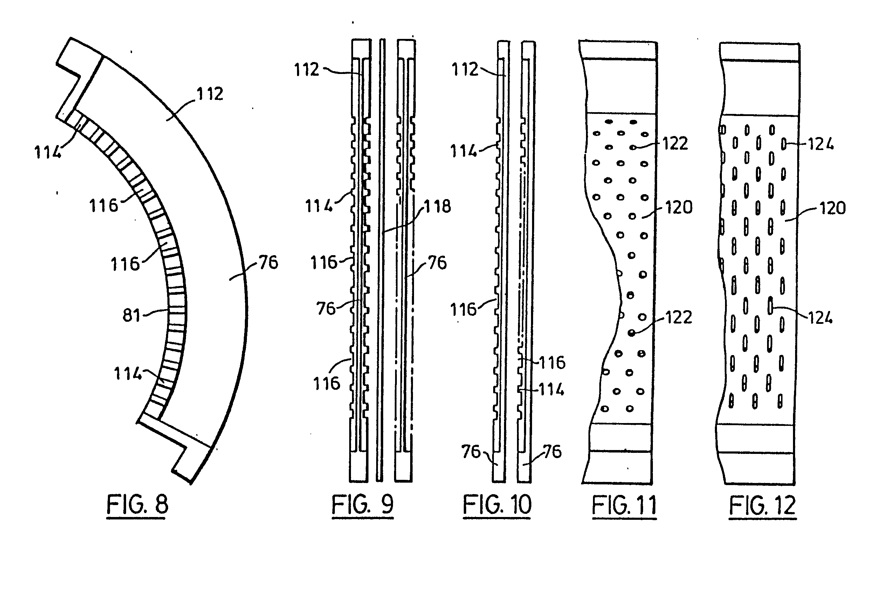

Figure 8 shows in greater detail a structure for the arcuate separator element 76 as employed in the embodiments of Figures 4 through 7, as seen in side elevation, while Figures 9 and 10 show different forms of element in end elevation. With the form of element illustrated by Figures 8 and 9, each element comprises a central web 112 that remains from the removal of material from a thick plate to leave a narrow arcuate radially-inner portion 114. This portion 114 is provided with radial slots 116 through which the separated soften component flows, while the harder component is moved by the vane blades over the separator inner surface 81, which in this embodiment, at this part of the chamber, also constitutes part of the cam surface 62. A plurality of such elements are assembled together and tightly packed with plain flat spacing elements 118 between each two adjacent elements.

In the embodiment illustrated by Figures 8 and 10 together the portion 114 is left at one side only of the element and the slots 116 are formed in this one side, so that the elements can be packed tightly together without the need for intermediate plane flat elements. Figures 11 and 12 show unitary filter structures 120 that can be used in place of the stack of elements consisting of a suitably fashioned sheet provided with a large plurality of round holes 122 (Figure 11) or slots 124 (Figure 2) elongated in the direction of movement of the rotor blates.

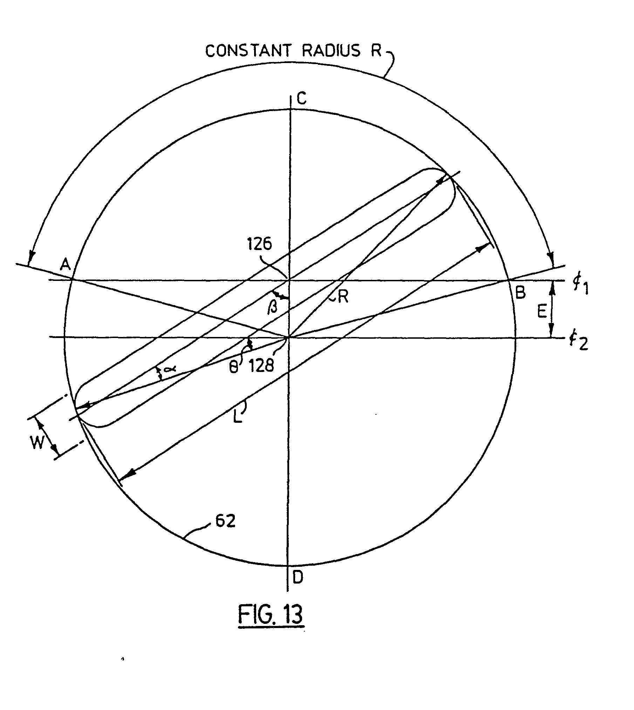

Figure 13 shows diagrammatically the side elevation of the cam face 62 and a single vane 54a stopped in one position. The diagram shows the centre line $\mathcal{C}_1$ of the rotor having its center of rotation at 126, and the centre line $\mathcal{C}_2$ of the cam having its centre of rotation at 128. The distance between the two centres is the eccentricity E which is known. The blade length L and thickness W are also known. The centre line of the blades must always pass through the centre 126 while the eccentricity E is directly proportional to the volume output of the pump and locates the imaginary centre 128 bf the cam. The rotor blades must seal the spaces between the rotor blades at all times, and therefore must at all times and in all positions of the rotor be in touch with the cam at both ends.

It is arbitrarily chosen that the maximum arc shall be of constant radius R, and this is the arc ACB at 128 with chord equal to the blade length L. Some correction must be made to L to account for the width of the blade and for the rounded tips of radius W/2. The variable cam radius r measured from centre 128 will vary with the angle $\theta$ and can be calculated geometrically, but an exact equation solution is not easily attainable. The problem is particularly suited to an iterative approach, especially with the use of a computer to effect the relative large number of calculations required to obtain the values of the cam radius necessary for the required accuracy of manufacture.

A value known to be a practical value is assumed for the angle $\alpha$ between the blade centre line and a radius through the centre 128. Angle $\beta$ can then be determined for any subsequent value of $\alpha$ knowing that the sum of angles $\alpha+\beta+\theta$ must be 90 degrees.

The values of variable cam radius r can then be calculated from the relationships

$$\frac{\left(r-\dfrac{W}{R}\right)}{\sin \beta} = \frac{E}{\sin \alpha} \tag{1}$$

and

$$\left(R-\frac{W}{2}\right)^2 = \left(r-\frac{W}{2}\right)^2 + (L-W)^2 - 2\left(r-\frac{W}{2}\right)(L-W)\cos \alpha \tag{2}$$

both of which must be satisfied. If the agreement is not within the required tolerance α must be adjusted and the procedure repeated until it is. All of the points on the non-constant radius arc ADB can be calculated using the different values of θ involved.

Other forms of rotary vaned pumps may also be employed in which the vanes are of fixed length, for example a pump of the type in which the vanes are mounted in radial slots in the rotor with their parallel largest faces parallel to the axis of rotation; the two radially-extending edges of each vane engage complementary face cams on two facing end walls and, as the rotor rotates, cause the vanes to slide axially of the rotor in their radial slots to vary cyclically the volumes of the chambers formed between the rotor and the end wall face cams. The shearing knife edge will, as with the previously-described embodiments, be provided at the edges which traverse the inlet aperture. However, such a structure requires the accurate production of two complementary face cams and their subsequent assembly facing one another and spaced accurately apart, so that the resulting construction is substantially more expensive than those described above.

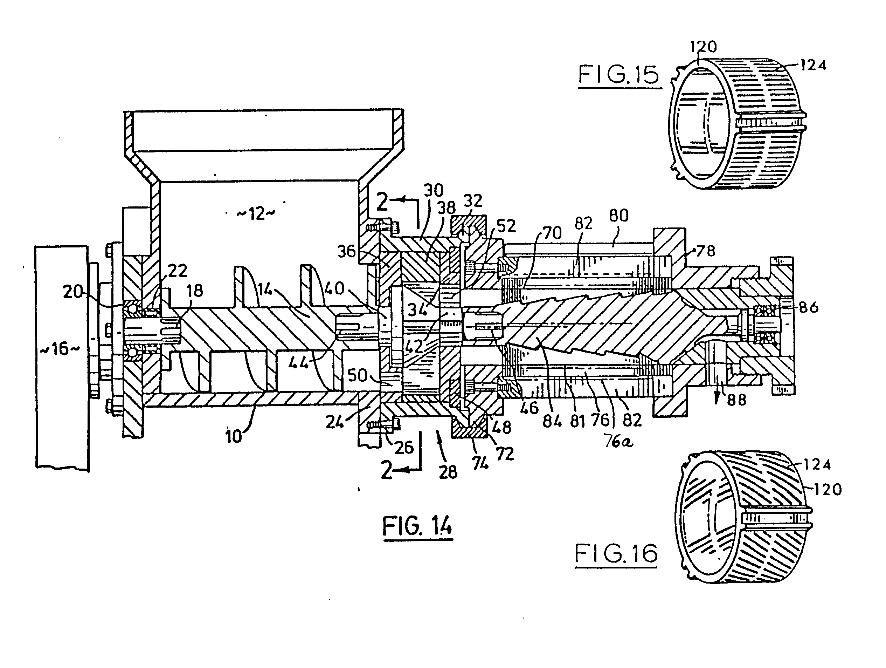

Another embodiment of the invention is illustrated by Figure 14, which is similar to the embodiment of Figures 1—3. Since, as explained above, the screw 84 is no longer required to pressurise the mixture in the chamber 70, it can be made somewhat shorter in length and substantial clearances can be provided between its exterior surface and the interior surface of the separator elements 76. In this embodiment the screw is designed and arranged to apply a pulsating radially-outwardly-acting force to the mixture which will facilitate the passage of the meat component through the separator screen, and hence the separation. To this end the screw profile is formed to be radially eccentric about the longitudinal axis of rotation. The screw tapers outwardly from the pump outlet 52 to the separator outlet 88 in order to take account of the progressive reduction in the volume of the mixture, but the screw lands are much reduced in radial extent as compared with the embodiment illustrated by Figure 1, where the screw lands just clear the interior walls of the separator elements 76.

This large spacing between the land tips and the separator screen reduces the possibility of pieces of the harder component being forced through the slots or jammed in the slots. In a specific example of an apparatus in which the diameter of the chamber 70 is 15cm (6 in.) the clearance between the tips of the vestigal lands and the cylindrical interior wall can be as much as 9.5—19mm (0.375—0.75 in.), the spacing of course varying as the screw rotates because of the eccentricity. In this embodiment the outlet 88 for the harder fraction is radial from the chamber 70.

The separator means described in relation to Figures 1—10, 12 and 14 provide circumferentially extending elongated slots through which the softer fraction (the meat fraction) is expressed. The mixture is moved within the chamber 70 both longitudinally and circumferentially thereof, so that the mixture is moved across the slots with a certain degree of shearing action. Round apertures 122 as employed in the embodiment of Figure 11 are multi-directional, but the size of hole that can be used is severely limited by the requirement as to the size of solid particles that can be present in the softer fraction. It is therefore preferred to use elongated slots which are both easier to form by cutting or milling and also provide for greater through-put of the apparatus. With some embodiments therefore it may be preferred to use a separator element 76 as illustrated by Figure 15, which is cylindrical and is provided with longitudinally-extending slots 124; a number of such elements will be assembled end to end and held in place via bars 82.

Such a cylindrical separator element 76 may also take the form illustrated by Figure 16, in which elongated slots 124 are disposed at a transverse angle such that they extend both longitudinally and transversly, the angle being determined to match as closely as possible the actual direction of movement of the material in the chamber 70 and minimize shearing between the mixture and the long slot edges. Minimum shearing is desired, especially in apparatus for the separation of meat and bone, since excessive shear can have a deleterious effect upon the quality of the separated softer material. It will be understood that different transverse angles will be optimum for different mixtures to be separated.

## Claims

1. Apparatus for the separation of mixtures of materials of different consistencies into separate fractions thereof at an operative separation pressure comprising:

an apparatus body having an inlet (50) for the mixture to be separated and respective outlets (76a, 88, 90) for the separated fractions;

separator screen means (76), whose downstream face (76a) constitutes the outlet for the separated first fraction, mounted on the said body and having an upstream face against which the mixture from the inlet (50) at the operative separation pressure is delivered for the corresponding first fraction thereof to pass through the separator screen means (76) to the downstream face (76a) thereof, and for the remaining second fraction to be retained by the separator screen means (76) and to pass to said outlet (88) for the retained fraction; and

a rotary vaned pump (28) between the mixture inlet (50) and the said upstream face of the separator screen means, said pump having:— a pump chamber receiving the mixture from the inlet (50) and a pump rotor (56) carrying at least one vane (54a or 54b) rotatable about an axis for pressurising the mixture in the pump chamber to said operative separation pressure;

characterised in that the rotary vaned pump (28) has a delivery pressure of from 70 to 210 kg/cm² (1,000

to 3,000 lbs/in$^2$); in that the pump chamber is mounted within the said body; in that the said at least one vane (54a or 54b) is of fixed radial length extending on both sides of the pump rotor axis and mounted in a respective radially-extending slot (58a or 58b) in the rotor (56) and moving radially therein as the rotor (56) rotates; in that the said pump chamber is formed about a chamber longitudinal axis which is radially displaced from said rotor axis of rotation so that each pump compartment formed by the at least one pump vane (54a, 54b) decreases in volume as the at least one pump vane (54a, 54b) moves from an inlet opening (50) to the pump chamber toward an outlet opening (52) from the pump chamber and increases in volume as the at least one pump vane (54a, 54b) moves from the outlet opening (52) toward the inlet opening (50); and in that the interior face of the pump chamber circumferential wall constitutes an interior cam face (62) moving the or each pump vane (54a, 54b) radially in the pump rotor as the pump rotor rotates with both radial edges of the at least one pump vane in operative contact with said interior cam face (62).

2. Apparatus as claimed in claim 1, characterised in that the said separator screen means (76-Figs. 4—6) comprises at least part of said pump chamber circumferential wall.

3. Apparatus as claimed in claim 2, characterised in that the said wall of the pump is mounted for rotation about the axis of rotation of the rotor, and there are provided means (92—100) for rotating said wall about the said axis for adjusting the timing of the pump.

4. Apparatus as claimed in any one of claims 1 to 3, characterised in that the said circumferential wall of the pump is mounted for rotation about the axis of rotation of the rotor, and there are provided means (92—100) for rotating the circumferential wall about the said axis for adjusting the timing of the pump cam.

5. Apparatus as claimed in any one of claims 1 to 4, characterised in that the pump includes two pump vanes (54a, 54b) mounted in the pump rotor at right angles to one another, both pump vanes being of fixed radial length, each pump vane extending on both sides of the pump rotor axis and having both of its radial edges in operative contact with the interior cam face.

6. Apparatus as claimed in any one of claims 1 to 5, characterised in that the leading face of each vane leading edge that passes over the inlet opening (50) to the pump chamber is formed as a shearing knife edge (66) for shear cutting any shear-cuttable solid material entering the pump compartment through the inlet opening and engaged by the shearing knife edge.

7. Apparatus as claimed in claim 6, characterised in that the leading face of each vane leading edge that passes over the inlet opening (50) to the pump chamber is hollow ground (64) to form a shearing knife edge (66) for shear cutting any shear-cuttable solid material entering the pump compartment through the inlet opening and engaged by the shearing knife edge (66).

8. Apparatus as claimed in claim 6 or 7, characterised in that an edge (68) of the said inlet opening (50) facing the said pump vane shearing knife edge (60) is formed as an opening shearing edge cooperating with the pump vane knife edge to shear cut Solid material interposed between them.

9. Apparatus as claimed in any one of claims 1 to 8, characterised by:
a hopper (12-Figs. 1 and 14) for the reception of the mixture to be separated having an outlet connected to the apparatus body inlet,
a conveyor screw (14) rotatably mounted within the said hopper feeding the mixture to the hopper outlet, and
means (16) for rotating the conveyor screw.

10. Apparatus as claimed in any one of claims 1 to 9, characterised by:
a separate separator chamber (70) having at least a part of a wall thereof constituted by the said separator screen means (76), which also constitute the outlet for the said first fraction, and another outlet (88) for the said second fraction,
means (52) connecting the interior (70) of the separator chamber to the interior of the pump chamber for delivering the pressurised mixture of material to the separator chamber interior,
a conveyor screw (84) rotatably mounted within the separator chamber interior (70) for conveying the pressurised mixture and the remaining second fraction in contact with the front face of the separator screen means to the said another outlet, and
means (16) for rotating the conveyor screw.

11. Apparatus as claimed in claim 10, characterised in that the said separator screen means is provided with elongated transverse angled slot (124) through which the respective separated component passes, the transverse angle of the slots corresponding to the direction of movement of the material in the separator chamber by the conveyor screw (84).

12. Apparatus as claimed in any one of claims 1 to 11, characterised in that said conveyor screw (84) has substantial clearance between its exterior surface and the cooperating interior surface of the fraction separating means (76).

13. Apparatus as claimed in any one of claims 1 to 12, characterised in that the said interior cam face radius has a circular arc portion of constant radius R of chord length equal to the pump vane blade length L corrected for blade width and for the radius W/2 of the rounded outer pump vane edges, and has the remaining arc portion of variable radius r calculated from the three relationships:

$$\frac{\left(r-\dfrac{W}{R}\right)}{\sin\beta}=\frac{E}{\sin\alpha} \tag{1}$$

$$\left(R-\frac{W}{2}\right)^2=\left(r-\frac{W}{2}\right)^2+(L-W)^2-2\left(r-\frac{W}{2}\right)(L-W)\cos\alpha \tag{2}$$

and

$$\alpha+\beta+\theta=90° \tag{3}$$

where E is the pump eccentricity determined by the displacement between the chamber and rotor longitudinal axes, α is the angle between the blade centre line and the radius r through the imaginary cam longitudinal axis, and θ is the angle between the cam centre line and the radius r through the imaginary cam longitudinal axis.

**Patentansprüche**

1. Einrichtung zur Trennung von Gemischen aus Materialien unterschiedlicher Konsistenz in getrennte Bestandteile bei einem wirksamen Trennungsdruck mit

einem Gehäuse der Einrichtung, die einen Einlaß (50) für das zu trennende Gemisch und entsprechende Ausgänge (76a; 90; 88) für die getrennten Bestandteile aufweist,

mit einem Trennsieb (76), dessen stromab weisende Seite (76a) den Ausgang für den ersten getrennten Bestandteil bildet, das von dem Gehäuse gehalten wird und das eine stromauf weisende Seite aufweist, gegen die das Gemisch vom Einlaß (50) mit dem wirksamen Trennungsdruck befördert wird, damit der entsprechende ersten Bestandteil davon durch das Trennsieb (76) zur Stromab weisenden Seite (76a) durchgeht und daß der zweite verbleibende Bestandteil durch das Trennsieb (76) zurückgehalten wird und zum Ausgang (88) für den zurückgehaltenen Bestandteil geht, und

mit einer Flügelpumpe (28) zwischen dem Gemischeinlaß (50) und der stromauf weisenden Seite des Trennsiebs, wobei die Pumpe versehen ist,

mit einer Pumpenkammer, die das Gemisch vom Einlaß (50) erhält und mit einem Pumpenrotor (56), der wenigstens einen Flügel (54a oder 54b) aufweist, der drehbar um eine Achse angeordnet ist, um das Gemisch in die Pumpenkammer bis zu dem wirksamen Trennungsdruck zu pressen, dadurch gekennzeichnet,

daß die Flügelpumpe (28) einen Förderdruck von 70 bis 210 kg/cm² (1,000 bis 3,000 lbs/in²) aufweist,

daß die Pumpenkammer im Gehäuse angeordnet ist,

daß der wenigstens eine Flügen (54a oder 54b) eine feste radiale Länge hat und sich zu beiden Seiten der Pumpenrotorachse erstreckt und der in einem entsprechend sich radial erstreckenden Schlitz (58a oder 58b) im Rotor (56) montiert ist und sich radial darin bewegt, so wie sich der Rotor (56) dreht,

daß die Pumpenkammer um eine Kammer-Längsachse geformt ist, die in einem Abstand von der Drehachse des Rotors liegt, so daß jedes Pumpenabteil, das von dem wenigstens einen Pumpenflügel (54a, 54b) gebildet wird, im volumen abnimmt, wenn sich der wenigstens eine Pumpenflügel (54a, 54b) von einer Einlaßöffnung (50) zur Pumpenkammer nach einer Auslaßöffnung (52) von der Pumpenkammer bewegt und daß das Volumen zunimmt, wenn sich der wenigstens eine Pumpenflügel (54a, 54b) von der Auslaßöffnung (52) nach der Einlaßöffnung (50) bewegt, und

daß die inner Fläche der Pumpenkammer-Umfangswand eine innere Exzenterfläche (62) bildet und der oder jeder Pumpenflügel (54a, 54b) radial im Pumpenrotor bewegt wird, wenn sich der Rotor dreht, wobei beide radialen Ränder des wenigstens einen Pumpenflügels in wirkungsmäßigen Kontakt mit der inneren Exzenterfläche (62) stehen.

2. Einrichtung nach Anspruch 1, dadurch gekennzeichnet, daß das Trennsieb (76-Fig. 4 bis 7) wenigstens einen Teil der Pumpenkammer-Umfangswand umfaßt.

3. Einrichtung nach Anspruch 2, dadurch gekennzeichnet, daß die Wand der Pump für eine Drehung um die Rotationsachse des Rotors montiert ist und Mittel (92 bits 100) vorgesehen sind zur Drehung der Wand um diese Achse zur Justierung der Einstellung fer Pumpe.

4. Einrichtung nach einem der Ansprüche 1 bis 3, dadurch gekennzeichnet, daß die Umfangswand (62, 76) der Pumpe für eine Drehung um die Rotationsachse des Rotors montiert ist und daß Mittel (92 bis 100) für eine Drehung der Umfangswand um diese Achse für die Justierung der Einstellung der Pumpenexzentrizität vorgesehen sind.

5. Einrichtung nach einem der Ansprüche 1 bis 4, dadurch gekennzeichnet, daß die Pumpe zwei Pumpenflügel (54a, 54b) enthält, die im Pumpenrotor rechtwinklig zueinander angebracht sind, wobei beide Pumpenflügel eine feste radiale Längen haben, jeder Pumpenflügel sich auf beide Seiten der Pumpenrotor-Längsachse erstreckt und beide ihrer radialen Ränder in betriebsmäßigen Kontakt mit der inneren Exzenterfläche liegen.

6. Einrichtung nach einem der Ansprüche 1 bis 5, dadurch gekennzeichnet, daß die Führungsfläche von jedem Flügelführungsrand, der über die Einlaßöffnung (50) zur Pumpenkammer streicht als abscherende Messerkante (66) geformt ist zum abscherenden Scheiden eines schneidbaren festen Materials, das in das Pumpenabteil durch die Einlaßöffnung eintritt und das von der abscherenden Messerkante erreicht wird.

7. Einrichtung nach Anspruch 6, dadurch gekennzeichnet, daß die Führungsfläche jeder Flügelführungskante, die über die Einlaßöffnung (50) zur Pumpenkammer streicht, als Hohlklinge (64) ausgeführt ist, um eine abscherende Messerkante (66) zu bilden, zum abscherenden Schneiden eines schneidbaren festen Materials, das in das Pumpenabteil durch die Einlaßöffnung eintritt und das durch die abscherende Messerkante (66) erreicht wird.

8. Einrichtung nach Anspruch 6 oder 7, dadurch gekennzeichnet, daß eine Kante (68) der Einlaßöffnung (50), die der Pumpenflügelschermesserkante (60) gegenüberliegt als eine Öffnungsscherkante ausgeführt ist, die mit der Pumpenflügelmesserkante zusammenarbeitet, um abscherend festes Material, das dazwischen eingeführt ist, zu schneiden.

9. Einrichtung nach einem der Ansprüche 1 bis 8, gekennzeichnet durch

einen Einfüllstutzen (12-Fig. 1 und 14) für die Aufnahme des zu trennenden Gemisches, der einen Ausgang aufweist, der mit dem Gehäuseeinlaß verbunden ist,

eine Förderschnecke (14), die drehbar innerhalb des Einfüllstutzens montiert ist und das Gemisch zum Einfüllstutzenauslaß fördert, und

mit Mitteln (16) für die Drehung der Förderschnecke.

10. Einrichtung nach einem der Ansprüche 1 bis 9, gekennzeichnet durch

eine getrennte Trennkammer (70), die wenigstens einen Teil einer Wand aufweist, die von der Trennsiebeinrichtung (76) gebildet ist, die auch den Auslaß für den ersten Bestandteil bildet und einen anderen Auslaß (88) für den zweiten Bestandteil,

Mittel (52), die das innere (70) der Trennkammer mit dem inneren der Pumpenkammer für eine Förderung des gepreßten Materialgemisches zum Trennkammerinneren verbinden,

eine Förderschnecke (84), die drehbar innerhalb des Trennkammerinneren (70) drehbar montiert ist für eine Förderung des gepreßten Gemisches und des verbleibenden zweiten Bestandteils in Kontakt mit der Frontfläche der Trennsiebmittel zum besagten anderen Auslaß und

Mittel (16) für die Drehung der Förderschnecke.

11. Einrichtung nach Anspruch 10, dadurch gekennzeichnet, daß das Trennsieb mit länglichen querliegenden Schlitzen (124) versehen ist, durch die die entsprechende abgetrennte Komponente durchgeht, und der Schrägwinkel der Schlitze der Bewegungsrichtung des Materials in der Trennkammer durch die Förderschnecke (84) entspricht.

12. Einrichtung nach einem der Ansprüche 1 bis 11, dadurch gekennzeichnet, daß die Förderschecke (84) einen merklichen Abstand zwischen seiner äußeren Oberfläche und der zusammenwirkenden inneren Oberfläche der Trennmittel (76) aufweist.

13. Einrichtung nach einem der Ansprüche 1 bis 12, dadurch gekennzeichnnet, daß der innere Exzenterflächenradius einen kreisförmigen Winkelbereich eines konstanten Radius R mit einer Sehnenlänge gleich der Pumpenflügelschaufellänge L aufweist, korrigiert für die Schaufelweite und für den Radius W/2 der gerundeten äußeren Pumpenflügelränder und einen verbleibenden Winkelbereich aufweist mit variablem Radius r, der aus den drei Beziehungen berechnet wird:

$$\frac{\left(r-\dfrac{W}{R}\right)}{\sin \beta}=\frac{E}{\sin \alpha} \tag{1}$$

$$\left(R-\frac{W}{2}\right)^2=\left(r-\frac{W}{2}\right)^2+(L-W)^2-2\left(r-\frac{W}{2}\right)(L-W)\cos \alpha \tag{2}$$

und

$$\alpha+\beta+\theta=90° \tag{3}$$

wobei E die Pumpenexzentrizität ist, die durch den Abstand zwischen der Kammer und Rotorlängsachsen bestimmt ist, α der Winkel zwischen der Schaufelmittellinie und dem Radius durch die imaginäre Exzenterlängsachse ist, und θ der Winkel zwischen der Exzentermittellinie und dem Radius zwischen der imaginären Exzenterlängsachse ist.


**Revendications**

1. Appareil de séparation de mélanges de matériaux ayant des consistances différentes en fractions séparées, à une pression de séparation de travail, comprenant:

# 0 132 084

un corps d'appareil ayant une entrée (50) du mélange à séparer et des sorties respectives (76a; 88, 90) des fractions séparées;

un dispositif (76) à grille de séparation dont la face aval (76a) constitue la sortie de la première fraction séparée, monté sur le corps et ayant une face amont contre laquelle est transmis le mélange provenant de l'entrée (50), à la pression de séparation de travail, afin que la première fraction correspondante passe à travers le dispositif à grille de séparation (76) vers la face aval (76a) de ce dispositif, et afin que la seconde fraction restante soit retenue par le dispositif (76) à grille de séparation et passe vers la sortie (88) de la fraction retenue; et

une pompe rotative (28) à palettes placée entre l'entrée (50) du mélange et la face amont du dispositif à grille de séparation, la pompe ayant une chambre de pompage recevant le mélange en provenance de l'entrée (50), et un rotor (56) de pompe portant au moins une palette (54a ou 54b) et destiné à tourner sur un axe afin qu'il mette le mélange à la pression de séparation de travail dans la chamber de pompage; caractérisée en ce que la pompe rotative à palettes (28) possède une pression de délivrance de 70 à 210 kg/cm$^2$ (de 1000 à 3000 livres par pouce carré); en ce que la chambre de pompage est montée à l'intérieur dudit corps; en ce que la palette ou chaque palette est d'une longueur radiale fixe qui s'étend des deux côtés de l'axe du rotor de la pompe et est montée dans une fente radiale respective (58a ou 58b) formée dans le rotor (56) et se déplaçant radialement à l'intérieur lorsque le rotor tourne;

en ce que la chambre de pompage est formé autour d'un axe longitudinal de la chambre, qui est décalé radialement par rapport à l'axe de rotation du rotor, si bien que chaque compartiment de pompage formé par une palette (54a, 54b) a une volume qui diminue lorsque la palette se déplace de l'ouverture d'entrée (50) de la chambre de pompage vers une ouverture de sortie (52) de la chambre de pompage, le volume augmentant lorsque la palette (54a, 54b) se déplace de l'ouverture (52) de sortie vers l'ouverture d'entrée (50); et en ce que la face interne de la paroi circonférentielle de la chambre de pompage constitue une face interne de came (62) déplaçant la palette ou chaque palette (54a, 54b) radialement dans le rotor de la pompe lorsque le rotor tourne, les deux bords radiaux de la palette étant en contact de travail avec pa face interne de came (62).

2. Appareil selon la revendication 1, caractérisé en ce que le dispositif (76—figures 4—6) à grille de séparation constitue au moins une partie de ladite paroi circonférentielle de la chambre de pompage.

3. Appareil selon la revendication 2, caractérisé en ce que ladite paroi de la pompe est montée afin qu'elle tourne autour de l'axe de rotation du rotor, et un dispositif (92—100) est destiné à faire tourner la paroi autour de l'axe de rotation afin que la synchronisation de la pompe soit réglée.

4. Appareil selon l'une quelconque des revendications 1 à 3, caractérisé en ce que ladite paroi circonférentielle de la pompe est montée afin qu'elle tourne autour de l'axe de rotation du rotor, et un dispositif (92—100) est destiné à faire tourner la paroi circonférentielle autour de cet axe afin que la synchronisation de la came de la pompe soit réglée.

5. Appareil selon l'une quelconque des revendications 1 à 4, caractérisé en ce que la pompe comporte deux palettes (54a, 54b) montées dans le rotor, perpendiculairement l'une à l'autre, les deux palettes ayant une longueur radiale fixe, chaque palette étant disposée des deux côtés de l'axe du rotor de la pompe et ayant ses deux bords radiaux au contact de la face interne de came pendant le fonctionnement.

6. Appareil selon l'une quelconque des revendications 1 à 5, caractérisé en ce que la face antérieure de chaque bord antérieur de palette qui passe sur l'ouverture d'entrée (50) de la chambre de pompage est sous forme d'un bord de couteau (66) assurant un cisaillement destiné à découper tout matériau solide pouvant être découpé par cisaillement qui pénètre dans le compartiment de pompage par l'ouverture d'entrée et vient en contact avec le bord de couteau de cisaillement.

7. Appareil selon la revendication 6, caractérisé en ce que la face antérieure de chaque bord antérieur de palette qui passe sur l'ouverture d'entrée (50) de la chambre de pompage est usinée en creux (64) afin qu'un borde de couteau de cisaillement (66) soit formé et permette la découpe de tout matériau solide pouvant être découpé par cisaillement qui pénètre dans le compartiment de pompage par l'ouverture d'entrée et vient en contact avec le bord (66) du couteau de cisaillement.

8. Appareil selon l'une quelconque des revendications 6 et 7, caractérisé en ce qu'un bord (68) de l'ouverture d'entrée (50) tourné vers le bord (60) du couteau de cisaillement de la palette est sous forme d'un bord de cisaillement de l'ouverture coopérant avec le bord de couteau de la palette afin qu'il découpe la matière solide interposée entre les deux bords.

9. Appareil selon l'une quelconque des revendications 1 à 8, caractérisé par:

une trémie (12—figures 1 et 14) destinée à recevoir le mélange à séparer et ayant une sortie raccordée à l'entrée du corps de l'appareil,

une vis (14) transporteuse montée afin qu'elle tourne dans la trémie et faisant avancer le mélange jusqu'à la sortie de la trémie, et

un dispositif (16) destiné à faire tourner la vis transporteuse.

10. Appareil selon l'une quelconque des revendications 1 à 9, caractérisé par:

une chambre séparé (70) de séparation ayant au moins une partie de paroi constituée par le dispositif (76) à grille de séparation, constituant aussi la sortie de la première fraction, et une autre sortie (88) de la seconde fraction,

un dispositif (52) de raccordement de l'intérieur (70) de la chambre de séparation à l'intérieur de la chambre de pompage, afin qu'il transmette le mélange sous pression à l'intérieur de la chambre de séparation,

une vis transporteuse (84) montée à l'intérieur de la chambre (70) de séparation afin qu'elle puisse tourner et transportant le mélange sous pression et la seconde fraction restante qui est en contact avec la face avant du dispositif à grille de séparation vers l'autre sortie, et

un dispositif (16) destiné à faire tourner la vis transporteuse.

11. Appareil selon la revendication 10, caractérisé en ce que le dispositif à grille de séparation a des fentes allongées (124) inclinées transversalement et destinés au passage du constituant séparée respectif, l'inclinaison des fentes correspondant à la direction de déplacement de la matière dans la chambre de séparation sous la commande de la vis transporteuse (84).

12. Appareil selon l'une quelconque des revendications 1 à 11, caractérisé en ce que la vis transporteuse (84) laisse un espace important entre sa surface externe et la surface interne coopérante du dispositif (76) de séparation des fractions.

13. Appareil selon l'une quelconque des revendications 1 à 12, caractérisé en ce que la face interne de came a une partie en arc de cercle de rayon constant R sur une longueur de corde égale à la longueur L de la palette de pompage, corrigée en fonction de la largeur de la palette et du rayon W/2 des bords externes arrondis de la palette, et a une partie restante en arc de courbe de rayon variable r calculée d'après les trois relations suivantes:

$$\frac{\left(r - \dfrac{W}{R}\right)}{\sin \beta} = \frac{E}{\sin \alpha} \tag{1}$$

$$\left(R - \frac{W}{2}\right)^2 = \left(r - \frac{W}{2}\right)^2 + (L-W)^2 - 2\left(r - \frac{W}{2}\right)(L-W)\cos \alpha \tag{2}$$

et

$$\alpha + \beta + \theta = 90° \tag{3}$$

E étant l'excentricité de la pompe, déterminée par l'écart entre les axes longitudinaux de la chambre et du rotor, α étant l'angle formé par l'axe central de la palette et le rayon r passant par l'axe longitudinal imaginaire de la came, et θ est l'angle formé par l'axe central de la came et le rayon r passant par l'axe longitudinal imaginaire de la came.

FIG. 1

0 132 084

FIG. 2

FIG. 3

FIG. 3A

FIG. 4

FIG. 5

0 132 084

FIG. 6

FIG. 7

0 132 084

FIG. 8    FIG. 9    FIG. 10    FIG. 11    FIG. 12

0 132 084

FIG. 13

FIG.15

FIG.16

FIG. 14